(19) Europäisches Patentamt
European Patent Office
Office européen des brevets

(11) Veröffentlichungsnummer : **0 386 021 B1**

(12) **EUROPÄISCHE PATENTSCHRIFT**

(45) Veröffentlichungstag der Patentschrift :
**18.09.91 Patentblatt 91/38**

(51) Int. Cl.$^5$ : **B60R 13/06**

(21) Anmeldenummer : **88908218.6**

(22) Anmeldetag : **27.09.88**

(86) Internationale Anmeldenummer :
**PCT/EP88/00867**

(87) Internationale Veröffentlichungsnummer :
**WO 89/04777 01.06.89 Gazette 89/12**

(54) **TÜRECKABDECKUNG UND -ABDICHTUNG.**

(30) Priorität : **20.11.87 DE 3739355**

(43) Veröffentlichungstag der Anmeldung :
**12.09.90 Patentblatt 90/37**

(45) Bekanntmachung des Hinweises auf die
Patenterteilung :
**18.09.91 Patentblatt 91/38**

(84) Benannte Vertragsstaaten :
**DE FR GB IT SE**

(56) Entgegenhaltungen :
**EP-A- 0 171 821**
**FR-A- 2 120 432**
**FR-A- 2 561 741**
**US-A- 4 747 232**
**Patent Abstracts of Japan, Band 10, Nr. 270**
**(M-517)(2326), 13. September 1985**

(56) Entgegenhaltungen :
**Patent Abstracts of Japan, Band 8, Nr. 253**
**(M-339)(1690), 20. November 1984**
**Patent Abstracts of Japan, Band 8, Nr. 5**
**(M-267)(1442), 11. Januar 1984**
**Patent Abstracts of Japan, Band 12, Nr. 109**
**(M-267)(2956), 8. April 1988**

(73) Patentinhaber : **AUDI AG**
**Auto-Union-Strasse 1 Postfach 220**
**W-8070 Ingolstadt (DE)**

(72) Erfinder : **SCHOLTYSSEK, Siegbert**
**Tulpenstr. 4**
**W-8071 Wettstetten (DE)**
Erfinder : **UEBELSTAEDT, Manfred**
**Neubaustr. 19**
**W-8071 Wettstetten (DE)**

(74) Vertreter : **Engelhardt, Harald**
**Audi AG Postfach 2 20**
**W-8070 Ingolstadt (DE)**

## Beschreibung

Die Erfindung bezieht sich auf eine Türeckabdeckung und -abdichtung mit den Merkmalen des Oberbegriffs des Anspruchs 1 (siehe and die Patentschrift FR-A-2120432).

Aus der EP-A-200582 ist eine Abdichtung für schließbare Fenster von Automobilen bekannt, bei deren Realisierung an der Karosserie ein besonderer Eckwinkel mit einer daran angebrachten Dichtung vorgesehen ist. Die Dichtung wird in einer Position ausgelegt, die einer Endstellung des Fensters entspricht. Dehnbewegungen oder Kompression derselben sollen durch ein steuerbares Fluid (heiz- und kühlbar) ausgeglichen werden. Dies erfordert einen relativ hohen Aufwand zur Sicherung der Dichtwirkung.

Aus der DE-A-3223459 ist eine Eckabdeckung für ein Fenster bekannt, mit einer Verkleidung und einem äußeren Element. Die Verkleidung und das äußere Element enthalten einen Mechanismus, der die Bewegung des äußeren Elements aus seiner eingebauten Lage in Gegenrichtung zu der Bewegung beim Anbringen des äußeren Elements an der Verkleidung begrenzt. Auch diese Konstruktion ist aufwendig und als Zwischenstück zwischen einer Zarge und Fenster mittels Sperrelementen verankerbar ausgebildet.

Aufgabe der Erfindung ist es, eine einfach und leicht zu montierende Abdeckung zwischen beweglichen und starren Teilen für Zwischenräume an Fenstern, wie Türfenstern von Kraftfahrzeugen, zu schaffen.

Die Aufgabe wird durch die kennzeichnenden Merkmale des Anspruchs 1 gelöst.

Dadurch, daß die Abdeckung an der Karosserie befestigt wird, ergibt sich der Vorteil einer leichten Montage. Dies ist für die Serienfertigung besonders wichtig. Die Teile sind leicht herstellbar und für ihre Formgestaltung bestehen keine Beschränkungen. Man kann sie leicht an vorhandene oder gewünschte Türen/Rahmen/Pfostenwinkel anpassen. Sie sind auch für ein Rahmenloses System geeignet.

Mit Vorteil ersetzen sie Blenden oder stylistische Verkleidungsteile und dichten zusätzlich die beweglichen Teile zur Karosserie hin ab. Dadurch spart man eine Dichtung und ein Trägerelement für die Abdeckung ein. Abdeckung und Dichtung sind entweder gemeinsam an der Karosserie befestigbar oder, mit besonderem Vorteil einstückig ausgebildet, z.B. anvulkanisiert.

Die, die Dichtung aufnehmenden Bauelemente der Karosserie, sind mit Vorteil als Leichtmetall-Strangpreßteile ausgebildet. Die neue Abdeckung ist mit Vorteil für alle Türen/Fenster insbesondere von viertürigen Personenkraftwagen anwendbar.

Ausführungsbeispiele der Erfindung sind in der beigefügten Zeichnung dargestellt und in der folgenden Beschreibung erläutert.

Es zeigen :

Fig. 1     eine Vordertür in geschlossener Stellung
Fig. 2     die gleiche Tür in geöffneter Stellung
Fig. 3     eine hintere Tür in geschlossener Stellung
Fig. 4     die gleiche Tür wie Fig. 3 in offener Stellung
Fig. 5     eine andere Ausführungsform der Erfindung in eingebautem Zustand
Fig. 6     die gleiche Ausführung wie Fig. 5 im Detail
Fig. 7     eine weitere Ausführungsform in Draufsicht
Fig. 8     die Ausführung nach Fig. 7 in Ansicht.

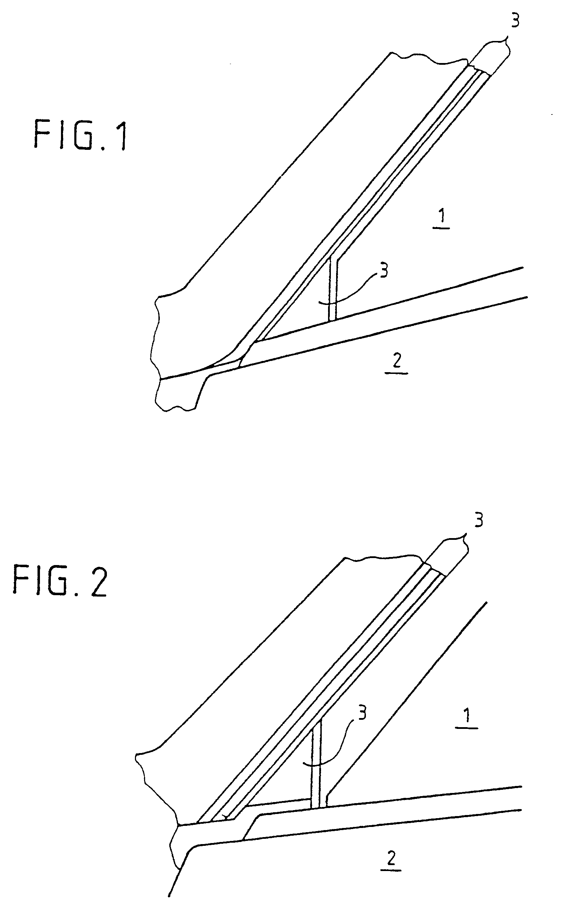

Fig. 1 zeigt die Anwendung der Erfindung auf eine Vordertüre eines Personenkraftwagens mit etwa dreiecksförmiger Eckabdeckung im Fensterrahmen. Das in der Zeichnung schräg anschließende Profil ist in den Rahmen der Karosserie 2 eingesetzt, insbesondere hiermit korrespondierendes Strangpreßprofil aus Leichtmetall. Der Zwischenraum zum Fenster 1 ist hierdurch geschlossen.

Abdeckung (4) und Abdichtung (3) sind hierbei gemeinsam eingesetzt (separat hergestellt) und dichten das Fenster im geschlossenen Zustand ab.

Die Fensterführung ist hiervon unbehindert, wie z. B. Fig. 2 zeigt und kann mit Vorteil als Parallelführung ausgebildet sein (vergleiche die Darstellung nach Fig. 2 mit offenem Fenster 1 in der Tür 6). Die Tür ist rahmenlos ausgeführt und wird voll abgedichtet.

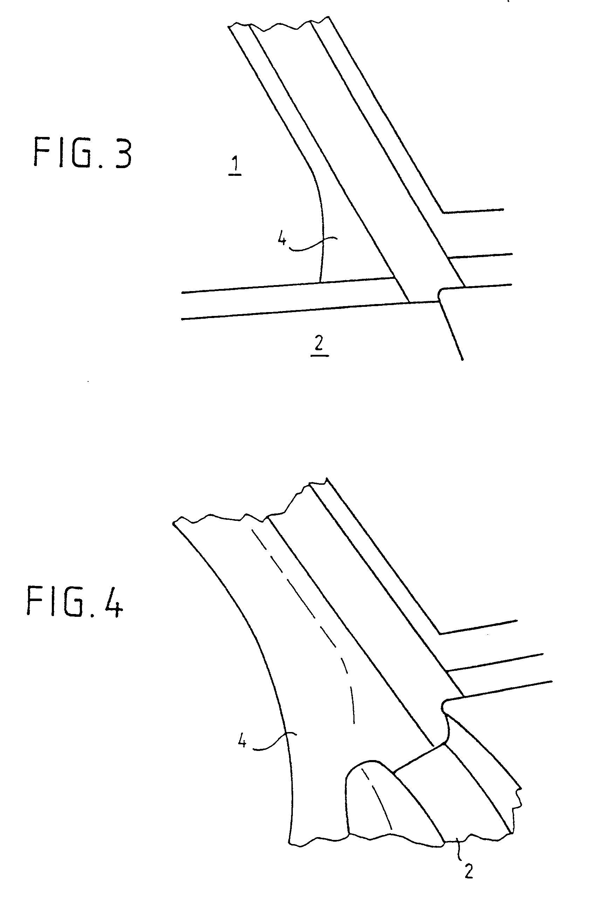

Die Fig. 3 zeigt eine hintere Tür in geschlossenem Zustand und Fig. 4 in offenem Zustand, wobei die Abdeckung und Dichtung 5 einstückig sind.

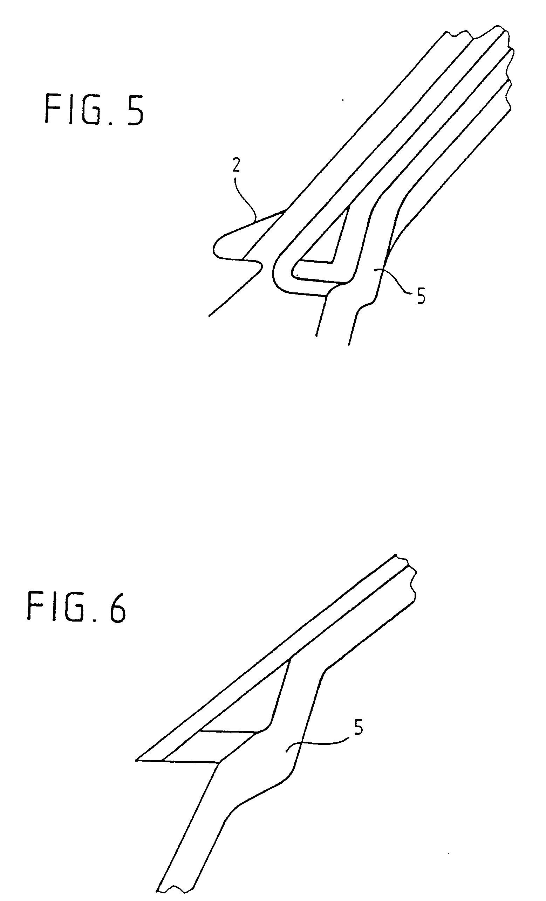

Die Figuren 5 und 6 zeigen eine andere Ausführungsform der Erfindung, wobei ein Hartkunststoff mit einem Elastomer-Kunststoff in einer Form gemeinsam hergestellt (z. B. anvulkanisiert) wird. Die Dichtung 5 übergreift dann die gesamte (Eck-) Fläche.

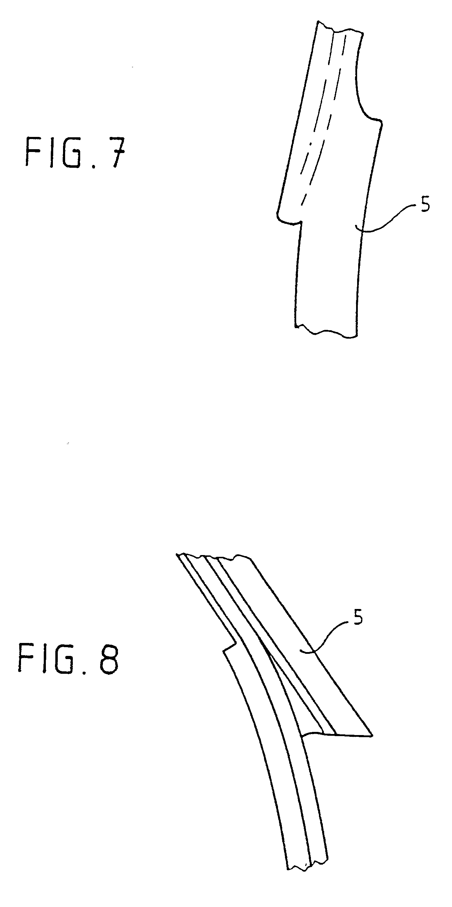

Auch bei den Ausführungsformen nach den fig. 7 und 8 wird Abdeckung und Abdichtung, wie vorstehend, gemeinsam ausgeformt. Mit Vorteil besteht das Teil für beide Funktionen aus einem Elastomer-Kunststoff oder Gummi.

2

Abwandlungen der Ausführungsbeispiele können getroffen werden, ohne hierdurch den Rahmen der Erfindung zu verlassen.

## Patentansprüche

1. Türeckabdeckung in einer Karosserie für Fahrzeuge, insbesondere für Personenkraftwagen, mit einer Türe, einer aus dem Türkörper herausbewegbaren Türscheibe sowie der im Bereich des Türausschnitts mit einer Seite an der Karosserie befestigten, etwa dreieckförmigen Abdeckung, von der bei geöffneter Türe zwei Seiten freiliegen, dadurch gekennzeichnet, daß bei geschlossener Türe die erste freie Seite zum Türkörper nach unten gerichtet ist und dichtend an dem Türkörper anliegt, und daß die zweite freie Seite bei geschlossener Türe an den etwa senkrechten Rand der Türscheibe bzw. einem Korosserieanschlußteil (Türe, Rahmen, Pfostenwinkel angepaßt ist.

2. Türeckabdeckung nach Anspruch 1, dadurch gekennzeichnet, daß die Abdeckung eine Dichtung aufnimmt.

3. Türeckabdeckung nach Anspruch 2, dadurch gekennzeichnet, daß die Dichtung einstückig an der Abdeckung angeformt, insbesondere anvulkanisiert, ist.

## Claims

1. Door-corner cover in a body for vehicles, in particular for passenger vehicles, with a door, a door pane which can be moved out of the door body, and the approximately triangular cover, which is secured by one side on the body in the region of the door cutout and of which two sides are exposed when the door is open, characterised in that, when the door is closed, the first free side faces downwards towards the door body and rests sealingly against the door body and in that, when the door is closed, the second free side is matched to the approximately vertical edge of the door pane or a body fitting (door, frame, pillar angle).

2. Door-corner cover according to Claim 1, characterised in that the cover accommodates a seal.

3. Door-corner cover according to Claim 2, characterised in that the seal is moulded integrally to the cover, in particular vulcanised to it.

## Revendications

1. Elément d'obturation de l'angle d'une portière dans une carrosserie de véhicule automobile, notamment de voiture particulière, comportant une portière, une glace levable hors du corps de portière, ainsi que l'élément d'obturation de forme à peu près triangulaire, qui est fixé par un côté à la carrosserie dans la région de la découpure de porte et dont deux côtés sont libres lorsque la portière est ouverte, caractérisé en ce que, quand la portière est fermée, le premier côté libre est dirigé vers le bas en direction du corps de portière et s'applique de manière étanche sur le corps de portière, et en ce que, quand la portière est fermée, le second côté libre est ajusté au bord à peu près vertical de la glace de portière ou d'une pièce de raccordement à la carrosserie (portière, cadre, équerre de montant).

2. Elément d'obturation de l'angle d'une portière selon la revendication 1, caractérisé en ce qu'il reçoit une garniture d'étanchéité.

3. Elément d'obturation de l'angle d'une portière selon la revendication 2, caractérisé en ce que la garniture d'étanchéité est forme d'une seule pièce sur l'élément d'obturation, an particulier par vulcanisation.

FIG.1

FIG.2

FIG.3

FIG.4

FIG. 5

2

5

FIG. 6

5

FIG. 7

5

FIG. 8

5